# EUROPEAN PATENT APPLICATION

(11) **EP 4 523 977 A1**
(43) Date of publication of application: **19.03.2025**
(21) Application number: 24189655.4
(22) Date of filing: 19.07.2024
(51) Int. Cl.: B60R 19/18, B60R 19/48

(54) **VEHICLE STRUCTURE**

(30) Priority: 15.09.2023 JP 2023150381
(71) Applicant: Suzuki Motor Corporation, Shizuoka 432-8611 (JP)
(72) Inventor: SAITO, Kazumasa, HAMAMATSU-SHI, 431-0201 (JP); SUZUKI, Kazuma, HAMAMATSU-SHI, 431-0201 (JP)
(74) Representative: Plasseraud IP

(57) **Abstract**

[Problem to be Solved] To improve impact-absorbing performance while reducing elastic deformation of an outer panel.

[Solution] A vehicle structure 1 is a vehicle structure including an outer panel which forms a design surface outside the vehicle and extends in the vehicle width direction, a first cross member (cross member) 43 which forms a part of a vehicle body structure member 40, and a reinforcement member 30 which is fixed to the first cross member 43 and reinforces the outer panel from of a back surface side of the outer panel. The reinforcement member 30 is formed so as to project toward the outside of the vehicle in the longitudinal direction of the vehicle from the first cross member 43, the reinforcement member 30 includes a middle reinforcement portion 30M which is located at the center in the vehicle width direction, and a side reinforcement portion 30S which is located on the outside in the vehicle width direction of the middle reinforcement portion 30M, and a gap G is provided between a part on the outside of the vehicle in the longitudinal direction of the vehicle of a vehicle widthwise outer edge 30Ma of the middle reinforcement portion 30M and a part on the outside of the vehicle in the longitudinal direction of the vehicle of a vehicle widthwise inner edge 30Sa of the side reinforcement portion 30S.

## Description

### [Technical Field]

The present invention relates to a vehicle structure including a structure for reinforcing an outer panel that forms an outer design surface at the front or rear of a vehicle.

### [Background Art]

In general, outer panels such as a bumper (also referred to as bumper face) and a grille that form design surfaces on the outside of a vehicle are provided at the front and rear of a vehicle such as an automobile. To compensate for the decrease in rigidity of the outer panel due to the increase in size of the outer panel, a reinforcement member is often arranged on the back surface side of the outer panel. The reinforcement member reduces elastic deformation and the like of the outer panel.

A vehicle front structure disclosed in Patent Literature 1 is known as an example of a vehicle structure having a structure for reinforcing a bumper face. In this vehicle front structure, a support member is provided along the back surface of a rear protruding portion of the bumper face.

### [Citation List]

### [Patent Literature]

[Patent Literature 1] JP 2010-158922 A

### [Summary of Invention]

### [Problem to be Solved by the Invention]

Incidentally, an outer panel provided at the front or rear of a vehicle is subjected to an impact load at the time of a frontal or rear collision. Accordingly, it is desirable for a reinforcement member of the outer panel to have a function of absorbing an impact in addition of the function of reducing elastic deformation of the outer panel. There is room for improvement in the support member disclosed in Patent Literature 1 with respect to this impact-absorbing function and the like.

In view of the foregoing, an object of the present invention is to provide a vehicle structure having a structure that can improve impact-absorbing performance while reducing elastic deformation of an outer panel.

### [Means for Solving the Problem]

In order to achieve the above objective, one aspect of the present invention provides a vehicle structure including an outer panel which forms an outer design surface at the front or rear of a vehicle and extends in a vehicle width direction, a cross member which forms a part of a vehicle body structure member of the vehicle and extends in the vehicle width direction, and a reinforcement member which is fixed to the cross member and reinforces the outer panel from a back surface side of the outer panel, the vehicle structure characterized in that the reinforcement member is formed so as to project toward the outside of the vehicle in a longitudinal direction of the vehicle from the cross member, the reinforcement member includes a middle reinforcement portion which is located at the center in the vehicle width direction, and a side reinforcement portion which is located on the outside in the vehicle width direction of the middle reinforcement portion, and a gap is provided between a part on the outside of the vehicle in the longitudinal direction of the vehicle of a vehicle widthwise outer edge of the middle reinforcement portion and a part on the outside of the vehicle in the longitudinal direction of the vehicle of a vehicle widthwise inner edge of the side reinforcement portion.

### [Advantageous Effect of Invention]

According to an aspect of the present invention, it is possible to provide a vehicle structure having a structure that can improve impact-absorbing performance while reducing elastic deformation of an outer panel.

### [Brief Description of Drawings]

[Figure 1] Figure 1 is a perspective view of a vehicle structure according to an embodiment of the present invention.
[Figure 2] Figure 2 is an exploded perspective view of the vehicle structure.
[Figure 3] Figure 3 is a front view of the vehicle structure from which an outer panel is removed.
[Figure 4] Figure 4 is a back view of the vehicle structure from which the outer panel and a lamp device are removed.
[Figure 5] Figure 5 is a top view of the vehicle structure for describing the structure of a reinforcement member.
[Figure 6] Figure 6 is a partial perspective view of a cross member to which the reinforcement member is fixed.
[Figure 7] Figure 7 is an enlarged partial perspective view of the cross member.
[Figure 8] Figure 8 is a partial perspective view including a lower cross member.
[Figure 9] Figure 9 is an A-A cross-sectional view shown in Figure 3.
[Figure 10] Figure 10 is an enlarged perspective view including a side reinforcement portion of the reinforcement member.
[Figure 11] Figure 11 is a top view for describing the fixing position of the reinforcement member to a vehicle body structure member.

### [Mode for Carrying Out the Invention]

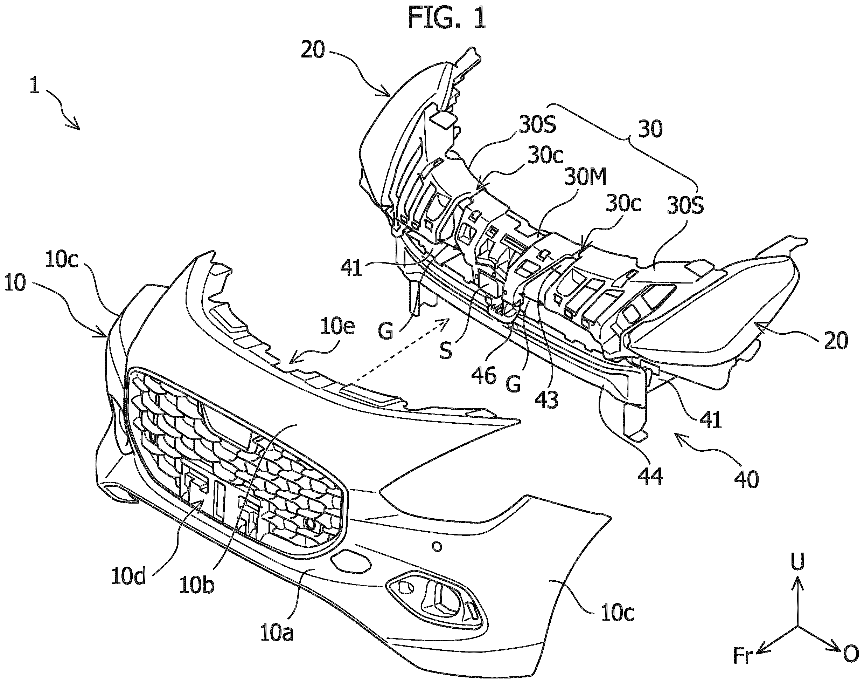

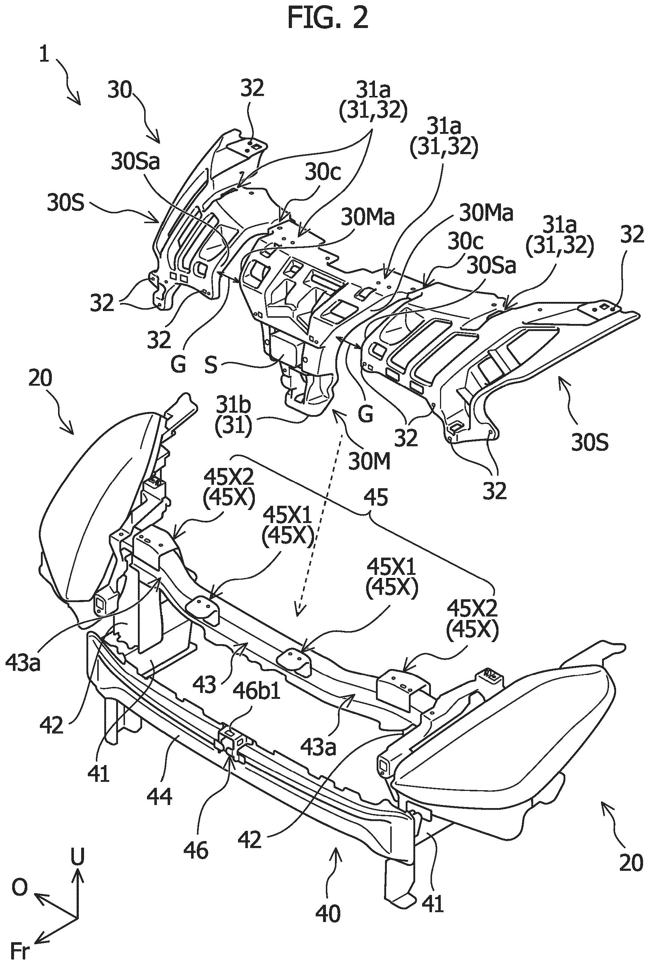

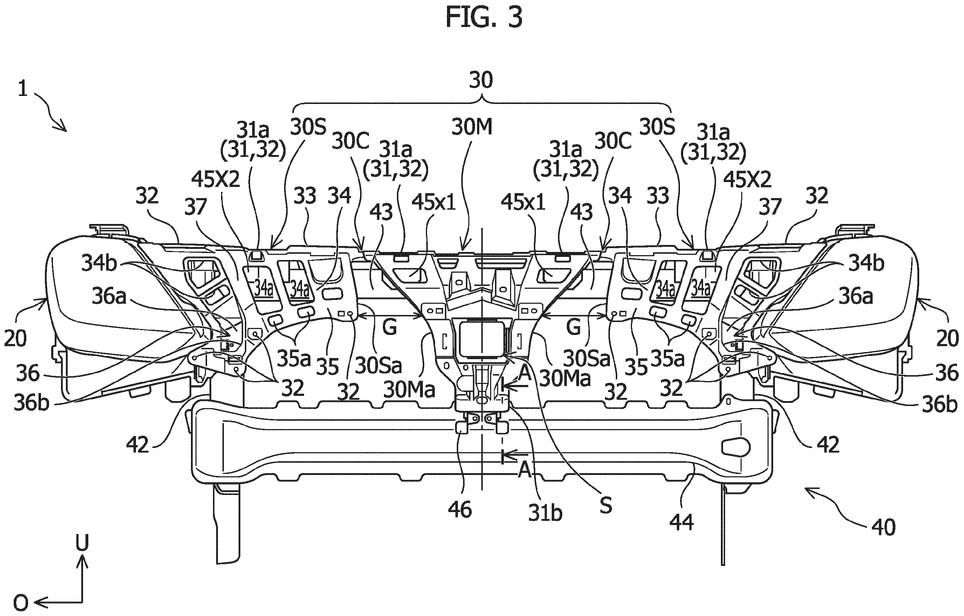

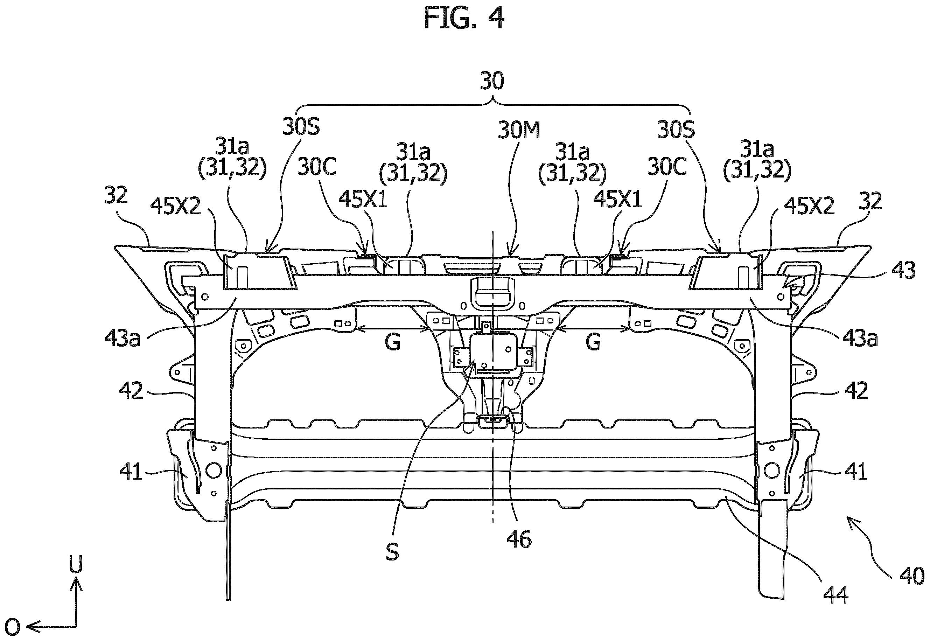

Hereinafter, an embodiment of the present invention will be described with reference to the accompanying drawings. Figures 1 to 4 are diagrams for describing a vehicle structure 1 according to an embodiment of the present invention. Figure 1 is a perspective view as viewed from the vehicle front of the vehicle structure 1, Figure 2 is an exploded perspective view of the vehicle structure 1, Figure 3 is a front view, and Figure 4 is a back view. Note that an outer panel 10 described later is removed in Figures 2 and 3, and a lamp device 20 described later is removed in Figure 4. In the drawings, an arrow Fr direction indicates the vehicle front in the longitudinal direction of the vehicle (i.e., in a vehicle front-rear direction), an arrow O direction indicates the outside (outside in vehicle width direction) of the vehicle in the vehicle width direction (vehicle width direction), and an arrow U direction indicates the upper side of the vehicle in the vertical direction of the vehicle. In the following description, "front" and "rear" correspond to the front and rear in the longitudinal direction of the vehicle, and "up" and "down" correspond to up and down in the vertical direction of the vehicle. In addition, "left" and "right" correspond to left and right in the vehicle width direction when viewed from the front side toward the rear side of the vehicle.

### (Summary of vehicle structure)

As illustrated in Figures 1 to 4, the vehicle structure 1 includes a structure for reinforcing the outer panel 10 of the vehicle and attaching (fixing) the outer panel 10 to the vehicle body side. In the present embodiment, the vehicle structure 1 is applied as a vehicle front structure. In the vehicle structure 1, at the front of the vehicle, each of a pair of lamp devices 20, 20, which are separated from each other in the vehicle width direction, are arranged adjacent to the outer panel 10.

In the present embodiment, the vehicle structure 1 includes the outer panel 10, the lamp device 20, a reinforcement member 30, and a vehicle body structure member 40. The vehicle structure 1 is symmetrical in the vehicle width direction.

The outer panel 10 is a member that forms a design surface on the outside of the vehicle and extends in the vehicle width direction. In the present embodiment, the outer panel 10 is a front bumper that forms an outer design surface at the front of the vehicle. In the illustrated example, the outer panel 10 as the front bumper has a bumper front surface portion 10a extending over the entire vehicle width direction, a bumper inclined surface portion 10b extending upward toward the rear in an inclined manner to a front portion of a front hood (not illustrated) from an upper portion of the bumper front surface portion 10a, and bumper side surface portions 10c extending rearward from both end portions in the vehicle width direction of the bumper front surface portion 10a. A large bumper opening is opened at the center of the bumper front surface portion 10a. The outer panel 10 has a resin front grille 10d that closes the bumper opening. A plurality of vent holes are opened in the front grille 10d, and the front grille 10d is an intake member in the illustrated example.

In the present embodiment, the lamp device 20 is a front lamp (also referred to as headlight) that mainly illuminates a region in front of the vehicle. The lamp device 20 is provided on each of the left and right at the vehicle front.

The reinforcement member 30 is a member for reinforcing the outer panel 10 from its back surface 10e side and fixing the outer panel 10 to the vehicle body (vehicle body structure member 40). The reinforcement member 30 generally extends along the back surface 10e of the outer panel 10 and over the entire vehicle width direction of the outer panel 10. The outer panel 10 is a large panel that is thin and spreads in a wide range in the vehicle width direction, and therefore its rigidity is relatively low. In order to reinforce the low-rigidity outer panel 10, the reinforcement member 30 supports the outer panel 10 at a plurality of locations from the back surface 10e of the outer panel 10. As described later, the reinforcement member 30 is fixed to the vehicle body (vehicle body structure member 40) at a plurality of locations. The reinforcement member 30 supports the outer panel 10 from the back surface 10e side by being coupled to the back surface 10e of the outer panel 10 at a plurality of locations. Note that the structure of the reinforcement member 30 will be described later.

In the present embodiment, a sensor device S is attached to the reinforcement member 30. The sensor device S is a device that is attached to the reinforcement member 30 to detect the environment outside the vehicle. In the present embodiment, the sensor device S is a device that detects an obstacle (obstacle outside vehicle), such as another vehicle located in front of the vehicle, using electromagnetic waves. In the present embodiment, the sensor device S uses millimeter waves as the electromagnetic waves. That is, the sensor device S is a millimeter wave radar. Note, however, that the electromagnetic waves used by the sensor device S are not limited to millimeter waves, they may be microwaves, for example.

The vehicle body structure member 40 is a highly rigid member forming a structural member of the vehicle body. At the vehicle front, a pair of front side members 41, 41, a pair of vertical braces 42, 42, a cross member 43 (hereinafter referred to as first cross member 43 as appropriate), a second cross member 44, and the like are provided as the vehicle body structure member 40. That is, each element (41, 42, 43, 44) forms a part of the vehicle body structure member 40 of the vehicle.

The pair of front side members 41, 41 are separated from each other in the vehicle width direction below the vehicle, and each front side member 41 extends in the longitudinal direction. Each vertical brace 42 is joined to an upper surface of the front side member 41 and extends upward. The first cross member 43 and the second cross member 44 are separated from each other in the vertical direction of the vehicle, and each cross member 43, 44 extends in the vehicle width direction.

In the present embodiment, the first cross member 43 is located above the second cross member 44 in the vertical direction of the vehicle, and can be referred to as an upper cross member or an upper bumper beam. The first cross member 43 is also a hood lock member as a structural member that receives a front portion of the front hood (not illustrated). One end of the first cross member 43 is joined to the upper end of one vertical brace 42, and the other end of the first cross member 43 is joined to the upper end of the other vertical brace 42. One end of the second cross member 44 (also referred to as lower cross member or lower bumper beam) is joined to the front end of one front side member 41, and the other end of the second cross member 44 is joined to the front end of the other front side member 41.

### (Details of vehicle structure)

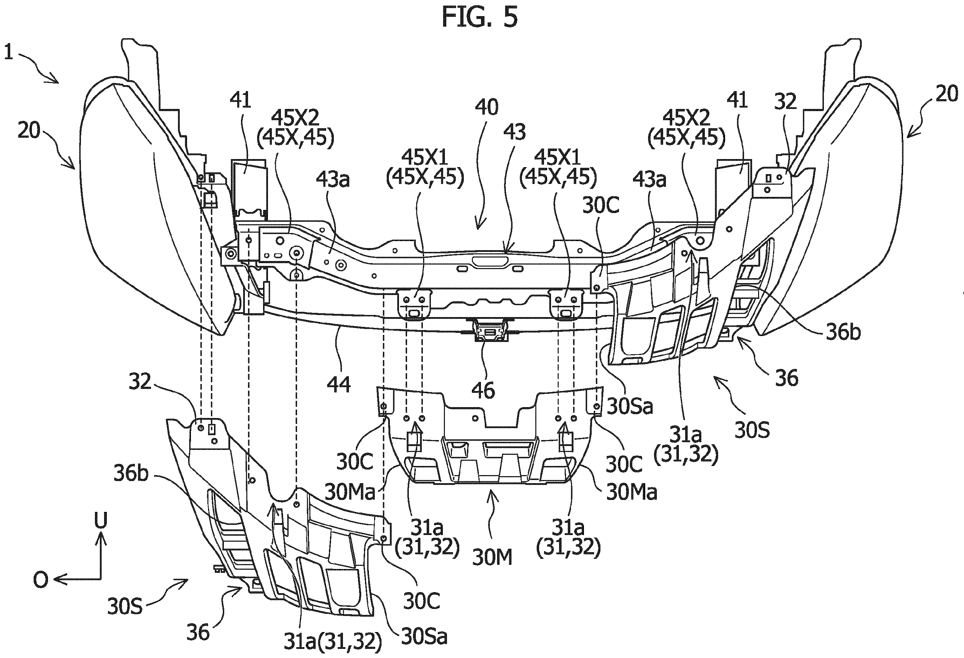

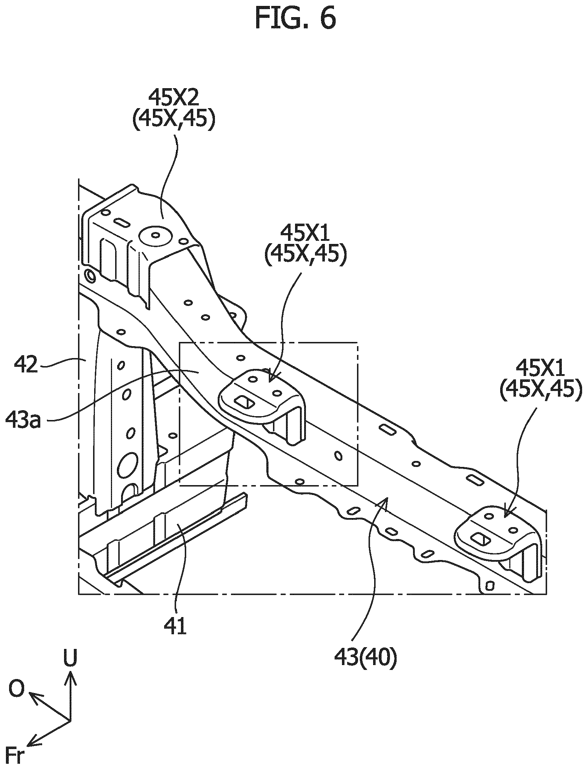

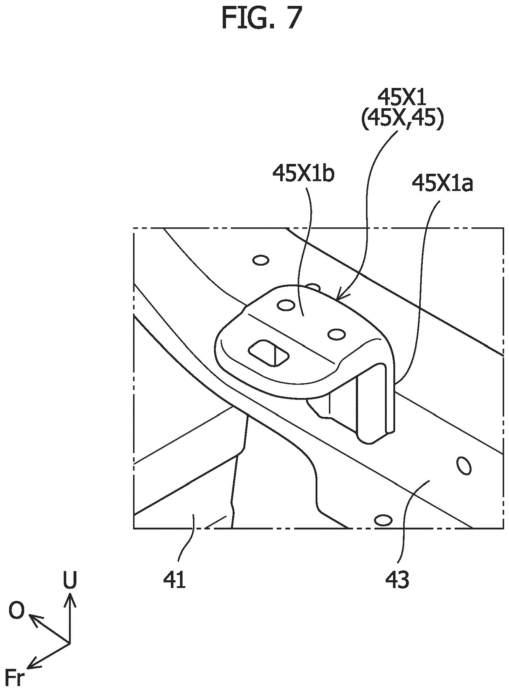

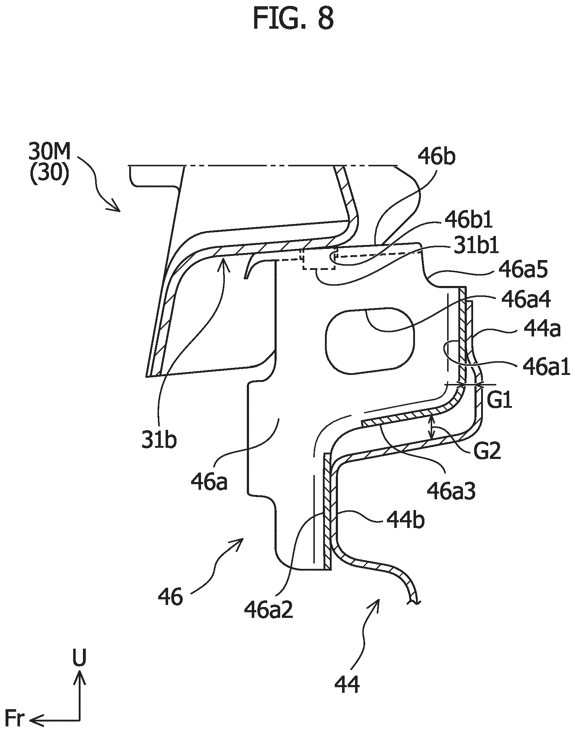

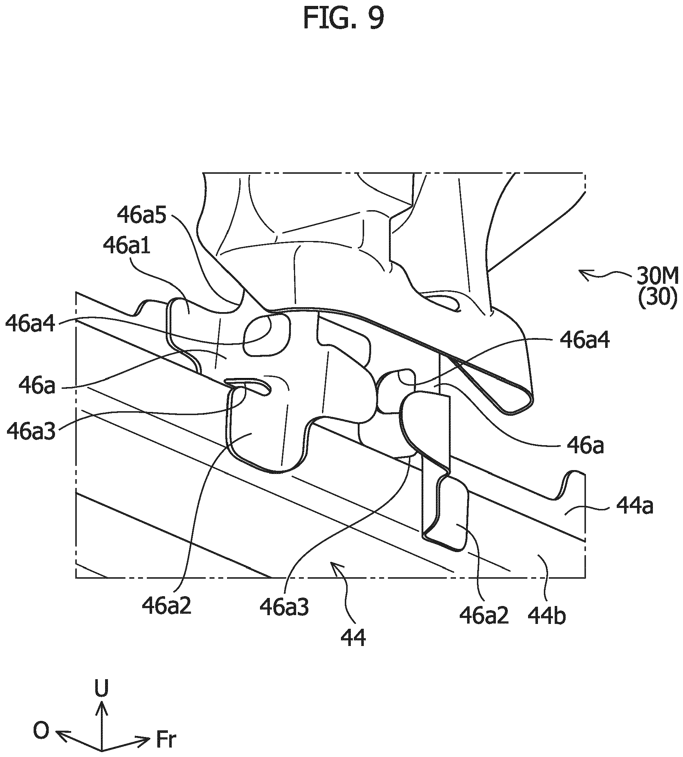

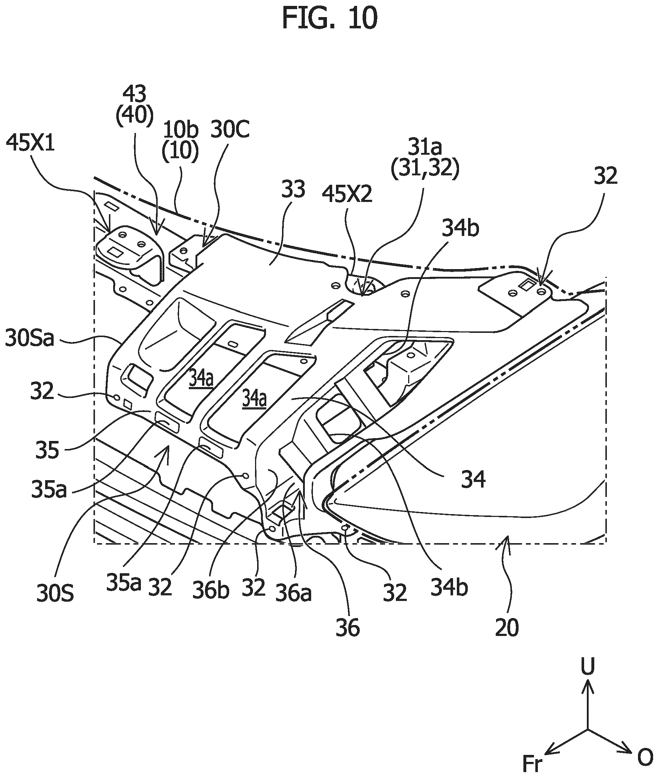

Hereinafter, the vehicle structure 1 will be described in detail with reference to Figures 1 to 10. Figure 5 is a top view of the vehicle structure 1 for describing the structure of the reinforcement member 30, Figure 6 is a partial perspective view of the cross member 43 (i.e., first cross member 43) to which the reinforcement member 30 is fixed, Figure 7 is an enlarged partial perspective view of the first cross member 43, Figure 8 is a partial perspective view including a lower cross member (i.e., second cross member 44), Figure 9 is an A-A cross-sectional view shown in Figure 3, and Figure 10 is an enlarged perspective view including a side reinforcement portion 30S described later of the reinforcement member 30. Note, however, that the outer panel 10 is removed in Figures 5 to 10.

With reference to Figures 1 to 4, the reinforcement member 30 extends in the vehicle width direction between the pair of lamp devices 20, 20. The reinforcement member 30 is a resin injection-molded product, for example. The reinforcement member 30 is formed so as to extend in the vehicle width direction generally along the bumper front surface portion 10a and the bumper inclined surface portion 10b on the back surface 10e of the outer panel 10.

The reinforcement member 30 is fixed to at least the first cross member 43. In the present embodiment, the reinforcement member 30 is fixed to both the first cross member 43 and the second cross member 44. The reinforcement member 30 has about the same length as each cross member 43, 44 in the vehicle width direction.

The reinforcement member 30 is formed so as to project toward the outside of the vehicle (frontward in present embodiment) in the longitudinal direction of the vehicle from the first cross member 43. That is, in the present embodiment, starting from the first cross member 43, the reinforcement member 30 projects frontward. Note that in the present embodiment, the "cross member" according to the present invention is the first cross member 43 (i.e., cross member 43).

The reinforcement member 30 includes a middle reinforcement portion 30M located at the center of the vehicle width direction and the side reinforcement portion 30S located on the outside in the vehicle width direction of the middle reinforcement portion 30M. That is, the reinforcement member 30 is divided into the left side reinforcement portion 30S, the right side reinforcement portion 30S, and the middle reinforcement portion 30M between the left side reinforcement portion 30S and the right side reinforcement portion 30S. The lamp device 20 described above is arranged on the outside in the vehicle width direction of the side reinforcement portion 30S.

In the present embodiment, the reinforcement member 30 has a connection portion 30C in which a vehicle interior-side end portion (rear end portion in illustrated example) in the longitudinal direction of the vehicle of a vehicle widthwise outer edge 30Ma of the middle reinforcement portion 30M and a vehicle interior-side end portion (rear end portion in illustrated example) in the longitudinal direction of the vehicle of a vehicle widthwise inner edge 30Sa of the side reinforcement portion 30S are connected to each other.

With reference to Figure 5, in the present embodiment, the middle reinforcement portion 30M, the left side reinforcement portion 30S, and the right side reinforcement portion 30S are formed of physically separated members. Then, the middle reinforcement portion 30M and the side reinforcement portion 30S are coupled (fastened) to each other with a coupling tool such as a bolt at the connection portion 30C (i.e., connection region 30C). That is, the reinforcement member 30 has the left side reinforcement portion 30S, the right side reinforcement portion 30S, and the middle reinforcement portion 30M between the left side reinforcement portion 30S and the right side reinforcement portion 30S, and the reinforcement member 30 is formed by connecting the left and right side reinforcement portions 30S and the middle reinforcement portion 30M at the connection portions 30C. In other words, in the present embodiment, the reinforcement member 30 is a reinforcement assembly or a reinforcement body formed by combining a plurality of members.

Specifically, in the illustrated example, a vehicle widthwise outer end portion of an upper portion of the middle reinforcement portion 30M and a vehicle widthwise inner end portion of an upper portion of the side reinforcement portion 30S are placed one on another, and this overlapped part (portion) is the connection portion 30C of the reinforcement member 30.

In the reinforcement member 30, a gap G is provided between a part on the outside of the vehicle (front portion in illustrated example) in the longitudinal direction of the vehicle of the vehicle widthwise outer edge 30Ma of the middle reinforcement portion 30M and a part on the outside of the vehicle (front portion in illustrated example) in the longitudinal direction of the vehicle of the vehicle widthwise inner edge 30Sa of the side reinforcement portion 30S. In other words, in the reinforcement member 30, a groove (cutout) open to the vehicle front is formed at a border between the middle reinforcement portion 30M and the side reinforcement portion 30S. Specifically, the gap G (i.e., the groove open to the front) is provided between the left side reinforcement portion 30S and the middle reinforcement portion 30M, and is provided between the right side reinforcement portion 30S and the middle reinforcement portion 30M.

In the present embodiment, the gap G is extended toward the connection portion 30C between the middle reinforcement portion 30M and the side reinforcement portion 30S in the longitudinal direction of the vehicle. Specifically, the gap G is extended to the front end of the connection portion 30C at the vehicle rear. In other words, the groove provided at the border of the middle reinforcement portion 30M and the side reinforcement portion 30S extends frontward from the front end of the connection portion 30C and is open to the vehicle front.

In the present embodiment, the gap G is set so as to narrow in the vehicle width direction from the outside of the vehicle in the longitudinal direction of the vehicle toward the connection portion 30C. Specifically, the gap G is closed at the connection portion 30C, and the width (i.e., separation width between vehicle widthwise outer edge 30Ma of middle reinforcement portion 30M and vehicle widthwise inner edge 30Sa of side reinforcement portion 30S) of the gap G in the vehicle width direction narrows from the vehicle front (open side) toward the vehicle rear (closed side). In other words, the width (the separation width) of the gap G in the vehicle width direction widens toward the vehicle front.

The reinforcement member 30 has a vehicle body fixing portion 31 fixed to the vehicle body structure member 40, and a panel coupling portion 32 coupled to the outer panel 10. The vehicle body fixing portion 31 and the panel coupling portion 32 are both provided at a plurality of locations.

In the present embodiment, the vehicle body fixing portion 31 has a first vehicle body fixing portion 31a fixed to the first cross member 43 and a second vehicle body fixing portion 31b fixed to the second cross member 44. In the illustrated example, the first vehicle body fixing portion 31a is provided in the upper portion of the reinforcement member 30 at two locations in a central part in the vehicle width direction, one location on the right side in the vehicle width direction, and one location on the left side in the vehicle width direction. The second vehicle body fixing portion 31b is provided below a central part in the vehicle width direction of the reinforcement member 30. Specifically, the first vehicle body fixing portion 31a is provided at two locations separated in the vehicle width direction in the upper portion of the middle reinforcement portion 30M, one location at the center in the vehicle width direction in the upper portion of the right side reinforcement portion 30S, and one location at the center in the vehicle width direction in the upper portion of the left side reinforcement portion 30S. Then, the second vehicle body fixing portion 31b is provided at one location in the lower portion of the middle reinforcement portion 30M.

The four first vehicle body fixing portions 31a in the upper portion (upper portion of middle reinforcement portion 30M and upper portion of side reinforcement portion 30S) of the reinforcement member 30 are provided in locations different from those of the two connection portions 30C in the vehicle width direction. More specifically, in the upper portion of the middle reinforcement portion 30M, the first vehicle body fixing portion 31a is provided on the inside in the vehicle width direction of the vehicle widthwise outer end portion, and the connection portion 30C is provided at the vehicle widthwise outer end portion. Then, in the upper portion of the side reinforcement portion 30S, the first vehicle body fixing portion 31a is provided at the center in the vehicle width direction, and the connection portion 30C is provided at the vehicle widthwise inner end portion. That is, in the present embodiment, each of the middle reinforcement portion 30M and the side reinforcement portion 30S is fixed to the first cross member 43 (cross member 43) at a location different from that of the connection portion 30C in the vehicle width direction.

The panel coupling portion 32 is provided at a plurality of locations such as the upper and lower portions of the vehicle widthwise outer edge portion of the reinforcement member 30 and the upper portion in the vertical direction of the vehicle. Although not particularly limited, of the vehicle body fixing portions 31, the first vehicle body fixing portion 31a coupled to the first cross member 43 is also coupled to the outer panel 10 and functions as the panel coupling portion 32.

Next, the fixing structure of the reinforcement member 30 and the first cross member 43 (cross member 43) and the fixing structure of the reinforcement member 30 and the second cross member 44 will be described in more detail.

In the present embodiment, the first cross member 43 is provided with a plurality of protrusions 45 protruding upward from the first cross member 43 and separated from each other in the vehicle width direction. Then, each of the middle reinforcement portion 30M and the side reinforcement portion 30S is fixed to at least one target protrusion 45X among the plurality of protrusions 45. In the illustrated example, the first cross member 43 is provided with four protrusions 45.

In the present embodiment, the at least one target protrusion 45X of the middle reinforcement portion 30M includes two target protrusions 45X separated from each other in the vehicle width direction. Then, the at least one target protrusion 45X of the side reinforcement portion 30S includes one target protrusion 45X. Hereinafter, the target protrusion 45X of the middle reinforcement portion 30M is referred to as a first upper bracket 45X1 as appropriate, and the target protrusion 45X of the side reinforcement portion 30S is referred to as a second upper bracket 45X2 as appropriate.

In the present embodiment, the second cross member 44 is provided with one lower bracket 46 protruding upward from the center in the vehicle width direction of the second cross member 44.

Each bracket (45X1, 45X2, 46) is a member formed by bending a thin metal plate. That is, in the illustrated example, each protrusion 45 (first upper bracket 45X1, second upper bracket 45X2) is a member that is physically separated from the first cross member 43, and the lower bracket 46 is also a member that is physically separated from the second cross member 44. Then, the protrusion 45 (first upper bracket 45X1, second upper bracket 45X2) is joined to the first cross member 43 and the lower bracket 46 is joined to the second cross member 44.

Then, the reinforcement member 30 is fixed to, and is supported by, the first cross member 43 via the first upper bracket 45X1 and the second upper bracket 45X2 which are joined to the upper first cross member 43, and fixed to, and supported by, the second cross member 44 via the lower bracket 46 joined to the lower second cross member 44. The first upper bracket 45X1 is provided at two locations near the center in the vehicle width direction of the first cross member 43, and the second upper bracket 45X2 is provided in both end portions in the vehicle width direction of the first cross member 43.

The first vehicle body fixing portion 31a of the upper portion of the reinforcement member 30 is fixed to the first cross member 43 by being coupled (fastened) to each of the first upper bracket 45X1 and the second upper bracket 45X2 with a coupling tool such as a bolt, and the second vehicle body fixing portion 31b of the lower portion of the central part in the vehicle width direction of the reinforcement member 30 is fixed to the second cross member 44 by being locked to the lower bracket 46.

In the present embodiment, both end portions in the vehicle width direction of the upper portion of the middle reinforcement portion 30M are fixed to the two target protrusions 45X (i.e., two first upper brackets 45X1) of the middle reinforcement portion 30M, the upper portion of each side reinforcement portion 30S is fixed to the one target protrusion 45X (i.e., one second upper bracket 45X2) of the side reinforcement portion 30S, and the lower portion of the middle reinforcement portion 30M is fixed to the one lower bracket 46.

With reference to Figures 6 and 7, each of the two target protrusions 45X (two first upper brackets 45X1) of the middle reinforcement portion 30M has a vertical wall 45X1a which extends upward, and a horizontal wall 45X1b which extends toward the outside of the vehicle in the longitudinal direction of the vehicle from the upper end of the vertical wall 45X1a and to which the middle reinforcement portion 30M is fixed.

Specifically, in the first upper bracket 45X1, the vertical wall 45X1a is generally formed in a rectangular shape in plan view, and is joined to a front surface of the first cross member 43. Then, the vertical wall 45X1a extends upward so that an upper portion of the vertical wall 45X1a projects upward from the upper surface of the first cross member 43. The horizontal wall 45X1b is generally formed in a rectangular shape in plan view, and extends frontward from the upper end of the vertical wall 45X1a. Then, the horizontal wall 45X1b extends frontward so as to project frontward from the front surface of the first cross member 43. Accordingly, the first upper bracket 45X1 is generally formed in an L shape in side view as viewed from one side in the vehicle width direction. Then, the upper portion of the middle reinforcement portion 30M is fixed to an upper surface of the horizontal wall 45X1b of the first upper bracket 45X1 via a coupling tool.

With reference to Figures 8 and 9, the lower bracket 46 is joined to a front surface of the second cross member 44, and has a pair of side walls 46a, 46a which are opposite each other and separated from each other in the vehicle width direction, and an upper wall 46b which connects the upper end of one side wall 46a and the upper end of the other side wall 46a and to which a lower portion (second vehicle body fixing portion 31b) of the middle reinforcement portion 30M is fixed. That is, the lower bracket 46 is formed in a tunnel shape open on the lower side of the upper wall 46b and protruding upward as a whole in front view.

Specifically, the second cross member 44 has a flange 44a forming an upper portion of the second cross member 44 and facing the vehicle front, and a protrusion 44b protruding to the vehicle front and extending in the vehicle width direction below the flange 44a. Then, the rear edge of the side wall 46a of the lower bracket 46 is cut out and bent along the flange 44a and the protrusion 44b. An upper flange piece 46a1 joined to a front surface of the flange 44a is provided in an upper portion of the rear edge of the side wall 46a, and a lower flange piece 46a2 joined to a front surface of the protrusion 44b and located frontward of the upper flange piece 46a1 is provided in a lower portion of the rear edge of the side wall 46a. In addition, the side wall 46a extends upward so that an upper portion of the side wall 46a projects upward from the flange 44a of the second cross member 44.

Moreover, of the edge portion of the side wall 46a, a connecting edge portion 46a3 connecting the upper flange piece 46a1 and the lower flange piece 46a2 is separated from a lower portion of the flange 44a and an upper surface of the protrusion 44b. That is, a gap G1 is provided between the connecting edge portion 46a3 and the lower portion of the flange 44a, and a gap G2 is also provided between the connecting edge portion 46a3 and the upper surface of the protrusion 44b.

Furthermore, an opening 46a4 is opened in a part of the side wall 46a above the protrusion 44b. In the illustrated example, the opening 46a4 is provided above the gap G2 between the connecting edge portion 46a3 and the upper surface of the protrusion 44b. Then, an upper rear corner of the side wall 46a is formed as a cutout portion 46a5 cut out toward the front.

The upper wall 46b is located above the upper portion (flange 44a) of the second cross member 44. Then, the rear end of the upper wall 46b is located frontward of the upper flange piece 46a1, and the cutout portion 46a5 is formed so as to extend between the rear end of the upper wall 46b and the upper end of the upper flange piece 46a1 in side view. In the upper wall 46b, a locking hole 46b1 (see Figures 2 and 8) for locking a projection 31b1 (see Figure 8) provided in the lower portion (second vehicle body fixing portion 31b) of the middle reinforcement portion 30M is opened.

Next, the shape of the middle reinforcement portion 30M and the shape of the side reinforcement portion 30S will be described.

With reference to Figures 1 to 5, the middle reinforcement portion 30M is formed so as to narrow in the vehicle width direction from one end side (upper end side in illustrated example) on which the first vehicle body fixing portion 31a is provided toward the other end side (lower end side in illustrated example) on which the second vehicle body fixing portion 31b is provided. In the illustrated example, the middle reinforcement portion 30M has an inverted trapezoidal outer shape with the upper bottom generally longer than the lower bottom in plan view, and is curved generally along the front grille 10d and the bumper inclined surface portion 10b of the outer panel 10 in side view.

With reference to Figure 10, in the present embodiment, the side reinforcement portion 30S has an upper wall 33, an inclined wall 34, and a panel fixing wall 35.

The upper wall 33 is a part that is fixed to the first cross member 43 (cross member 43) and faces upward. In the illustrated example, the upper wall 33 forms an upper portion of the side reinforcement portion 30S. In the side reinforcement portion 30S, the first vehicle body fixing portion 31a is provided at the center in the vehicle width direction of the upper wall 33, and the vehicle widthwise inner end portion of the upper wall 33 forms the connection portion 30C with the middle reinforcement portion 30M.

The inclined wall 34 is a part extending toward the outside of the vehicle in the longitudinal direction of the vehicle and downward in the vertical direction of the vehicle from the upper wall 33. In the illustrated example, the inclined wall 34 forms most of the side reinforcement portion 30S. The inclined wall 34 extends frontward and downward from a location above the first cross member 43. The inclined wall 34 is generally inclined along the bumper inclined surface portion 10b of the outer panel 10. The vehicle widthwise outer edge of the inclined wall 34 extends along the lamp device 20.

The panel fixing wall 35 is a part which extends downward from the inclined wall 34 and to which the outer panel 10 is fixed. In the illustrated example, the panel fixing wall 35 forms a lower portion of the side reinforcement portion 30S and faces the front. The panel fixing wall 35 extends slightly downward from the lower end of the inclined wall 34.

A plurality of openings are opened in the side reinforcement portion 30S. In the present embodiment, a first opening 34a extending in the vertical direction is opened in the inclined wall 34, and a second opening 35a adjacent to the first opening 34a is opened in the panel fixing wall 35. Although not particularly limited, in the illustrated example, there are two first openings 34a and two second openings 35a. The two first openings 34a are separated from each other in the vehicle width direction, and the two second openings 35a are also separated from each other in the vehicle width direction. Then, the first opening 34a extends over almost the entire vertical direction of the inclined wall 34 and is formed as a rectangular opening long in the vertical direction of the vehicle. The second opening 35a is formed as a rectangular opening long in the vehicle width direction. Moreover, one second opening 35a in the vehicle width direction is located below the lower edge of one first opening 34a in the vehicle width direction, and the other second opening 35a in the vehicle width direction is located below the lower edge of the other first opening 34a in the vehicle width direction. On the inclined wall 34, an obliquely extending column is formed between the two first openings 34a. Then, on the panel fixing wall 35, a column continuous with the column between the two first openings 34a and extending vertically is formed between the two second openings 35a.

In the illustrated example, on the inclined wall 34, the two first openings 34a are provided at the center in the vehicle width direction. Then, in the present embodiment, a plurality of (two in illustrated example) third openings 34b are also opened in addition to the first openings 34a in the inclined wall 34. The two third openings 34b are separated from each other in the vertical direction. Then, the two third openings 34b are provided in the vicinity of the vehicle widthwise outer edge of the inclined wall 34, and are located on the outside in the vehicle width direction of the two first openings 34a.

In the present embodiment, the side reinforcement portion 30S has a bulging portion 36 bulging toward the inside of the vehicle in the longitudinal direction of the vehicle, and a coupling wall 37.

The bulging portion 36 has a bottom wall 36a (see Figures 3 and 10) fixed to the lamp device 20 arranged on the outside in the vehicle width direction of the side reinforcement portion 30S. In the illustrated example, the bulging portion 36 is formed so as to bulge toward the vehicle rear at a lower portion of the vehicle widthwise outer edge portion of the side reinforcement portion 30S. Then, the bottom wall 36a of the bulging portion 36 is a rear wall of the bulging portion 36 bulging toward the vehicle rear and faces the vehicle front. The bottom wall 36a is offset to the vehicle rear from the panel fixing wall 35. A lower portion of a vehicle widthwise inner portion of the lamp device 20 is coupled (fastened) to the back surface of the bottom wall 36a with a coupling tool such as a bolt (not illustrated).

The coupling wall 37 couples the fixing part (i.e., first vehicle body fixing portion 31a) to the first cross member 43 (cross member 43) and a vehicle widthwise inner wall 36b of the bulging portion 36. In the illustrated example, on the inclined wall 34, the coupling wall 37 generally extends vertically between the first opening 34a and the third opening 34b and couples the first vehicle body fixing portion 31a provided in the upper wall 33 and the vehicle widthwise inner wall 36b of the bulging portion 36.

The coupling wall 37 couples the vehicle widthwise inner wall 36b of the bulging portion 36 and the panel fixing wall 35 with the first vehicle body fixing portion 31a.

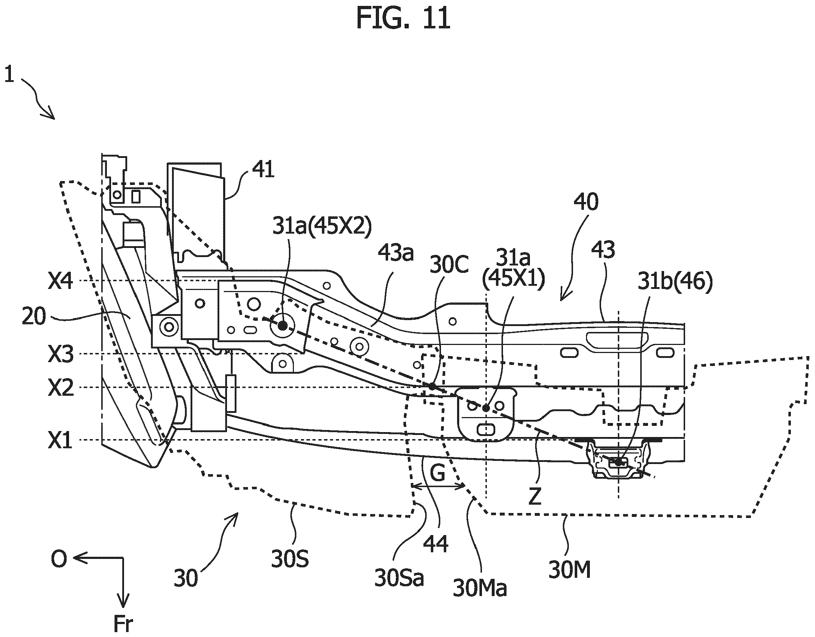

Next, the relationship of the fixing position of the reinforcement member 30 to the vehicle body structure member 40 (first cross member 43 and second cross member 44) and the like will be described with reference to Figure 11. Figure 11 is a top view for describing the fixing position of the reinforcement member 30 to the vehicle body structure member 40. Note that in Figure 11, the outer panel 10 is removed and an outline of the middle reinforcement portion 30M and the side reinforcement portion 30S of the reinforcement member 30 is shown in dashed lines.

In Figure 11, X1 indicates a front end position of the first upper bracket 45X1 and a rear end position of the lower bracket 46, X2 indicates a rear end position of the first upper bracket 45X1, X3 indicates a front end position of the second upper bracket 45X2, and X4 indicates a rear end position of the second upper bracket 45X2. With reference to Figure 11, the second upper bracket 45X2 is located outside in the vehicle width direction and rearward in the longitudinal direction of the vehicle of the first upper bracket 45X1. Moreover, the lower bracket 46 is located inward in the vehicle width direction and frontward in the longitudinal direction of the vehicle of the first upper bracket 45X1 and the second upper bracket 45X2.

As described above, the reinforcement member 30 has a plurality of vehicle body fixing portions 31 fixed to the vehicle body structure member 40, and the vehicle body fixing portion 31 has the first vehicle body fixing portion 31a fixed to the first cross member 43 and the second vehicle body fixing portion 31b fixed to the second cross member 44.

With reference to Figure 11, in plan view as viewed from above the vehicle, the first vehicle body fixing portion 31a (i.e., second upper bracket 45X2) of the side reinforcement portion 30S, the connection portion 30C, the first vehicle body fixing portion 31a (i.e., first upper bracket 45X1) of the middle reinforcement portion 30M, and the second vehicle body fixing portion 31b (i.e., lower bracket 46) of the middle reinforcement portion 30M are aligned approximately on a virtual straight line Z in this order. That is, the virtual straight line Z is a straight virtual line passing through the first vehicle body fixing portion 31a (second upper bracket 45X2) of the side reinforcement portion 30S, the connection portion 30C, the first vehicle body fixing portion 31a (first upper bracket 45X1) of the middle reinforcement portion 30M, and the second vehicle body fixing portion 31b (lower bracket 46) of the middle reinforcement portion 30M. Such an arrangement makes it easy for vibration or a load (external force) that may be input to the reinforcement member 30 at the time of a frontal collision to be mutually transmitted between the middle reinforcement portion 30M and the side reinforcement portion 30S. Hence, the vibration or load is easily distributed throughout the reinforcement member 30 without acting locally on the reinforcement member 30.

Moreover, in plan view as viewed from above the vehicle, the first cross member 43 and the second cross member 44 are separated from each other in the longitudinal direction of the vehicle. The first cross member 43 is arranged at a position offset to the vehicle rear from the second cross member 44. Both sides in the vehicle width direction of the first cross member 43 are curved so that vehicle widthwise outer ends of the first cross member 43 are offset to the vehicle rear from other parts of the first cross member 43.

The inclined portions 43a inclined and curved rearward on both sides in the vehicle width direction of the first cross member 43 extend parallel to the virtual straight line Z. Accordingly, external force input to the first cross member 43 is easily transmitted to each other between the first upper bracket 45X1 and the second upper bracket 45X2 in the first cross member 43.

As described above, the second upper bracket 45X2 to which the side reinforcement portion 30S is fixed is located at the vehicle rear of the first upper bracket 45X1 to which the middle reinforcement portion 30M is fixed. Then, with reference to Figure 11, while the front end position of the side reinforcement portion 30S approximately coincides with the front end position of the middle reinforcement portion 30M, the side reinforcement portion 30S extends to the vehicle rear from the rear end of the middle reinforcement portion 30M and is fixed to the second upper bracket 45X2. Accordingly, when a load (external force) is input to the reinforcement member 30 from the outside at the time of a frontal collision or the like, the deformation margin in the longitudinal direction of the side reinforcement portion 30S is larger than the deformation margin in the longitudinal direction of the middle reinforcement portion 30M.

According to the vehicle structure 1 of the present embodiment formed as described above, the reinforcement member 30 is formed so as to project toward the outside of the vehicle in the longitudinal direction of the vehicle from the first cross member 43 (cross member 43), the reinforcement member 30 includes the middle reinforcement portion 30M located at the center in the vehicle width direction, and the side reinforcement portion 30S located on the outside in the vehicle width direction of the middle reinforcement portion 30M, and the gap G is provided between a part on the outside of the vehicle (front portion in illustrated example) in the longitudinal direction of the vehicle of the vehicle widthwise outer edge 30Ma of the middle reinforcement portion 30M and a part on the outside of the vehicle (front portion in illustrated example) in the longitudinal direction of the vehicle of the vehicle widthwise inner edge 30Sa of the side reinforcement portion 30S. That is, the reinforcement member 30 is formed such that a front portion of the vehicle widthwise outer edge of the middle reinforcement portion 30M and a front portion of the vehicle widthwise inner edge of the side reinforcement portion 30S are separated from each other in the vehicle width direction. As a result, when external force is input to the front portion of the reinforcement member 30 from the outside of the vehicle (vehicle front) by a frontal collision or the like, the middle reinforcement portion 30M and each side reinforcement portion 30S deform individually, and the deformation of each component can efficiently consume and absorb the impact energy due to the frontal collision or the like. Then, since the reinforcement member 30 reinforces the outer panel 10 from its back surface 10e side, for example, minute elastic deformation due to contact with a hand of a person during the washing of a car or the like is reduced, and elastic deformation from the intended shape and hanging of the outer panel 10 due to the weight of the outer panel 10 itself is reduced.

As described above, the vehicle structure 1 according to the present embodiment is a vehicle structure having a structure that can improve impact-absorbing performance while reducing elastic deformation of the outer panel 10.

In the present embodiment, the gap G is extended toward the connection portion 30C of the middle reinforcement portion 30M and the side reinforcement portion 30S in the longitudinal direction of the vehicle. As a result, at the time of a frontal collision or the like, individual deformation of each element (middle reinforcement portion 30M and left and right side reinforcement portions 30S) of the reinforcement member 30 is more effectively promoted, and impact-absorbing performance can be improved even more.

In the present embodiment, the gap G is set so as to narrow in the vehicle width direction from the outside of the vehicle in the longitudinal direction of the vehicle toward the connection portion 30C. As a result, entry of the collision object into the gap G between the middle reinforcement portion 30M and the side reinforcement portion 30S to the vehicle body structure member 40 side is effectively avoided while improving impact-absorbing performance.

In the present embodiment, each of the middle reinforcement portion 30M and the side reinforcement portion 30S is fixed to the first cross member 43 (cross member 43) at a location different from that of the connection portion 30C in the vehicle width direction. As a result, the connection portion 30C of the middle reinforcement portion 30M and the side reinforcement portion 30S and the fixing point of each reinforcement portion (30M, 30S) to the vehicle body structure member 40 are provided at different locations. As a result, at the time of a frontal collision or the like, deformation or the like of the middle reinforcement portion 30M and the side reinforcement portion 30S starting from the connection portion 30C is easily promoted, and the individual deformation can be promoted.

In the present embodiment, the first cross member 43 (cross member 43) is provided with a plurality of protrusions 45 protruding upward from the first cross member 43 and separated from each other in the vehicle width direction. Each of the middle reinforcement portion 30M and the side reinforcement portion 30S is fixed to at least one target protrusion 45X of the plurality of protrusions 45. As a result, when external force acts on the middle reinforcement portion 30M or the side reinforcement portion 30S, the plurality of protrusions 45 are easily deformed by buckling and the like. As a result, impact-absorbing performance at the time of a frontal collision or the like can be improved more effectively.

In the present embodiment, the at least one target protrusion 45X of the middle reinforcement portion 30M includes two target protrusions 45X separated from each other in the vehicle width direction. Both end portions in the vehicle width direction of the upper portion of the middle reinforcement portion 30M are fixed to the two target protrusions 45X (two first upper brackets 45X1) of the middle reinforcement portion 30M, and each of the two first upper brackets 45X1 has the vertical wall 45X1a which extends upward and the horizontal wall 45X1b which extends toward the outside of the vehicle in the longitudinal direction of the vehicle from the upper end of the vertical wall 45X1a and to which the middle reinforcement portion 30M is fixed. As a result, external force input to the middle reinforcement portion 30M by a frontal collision or the like is distributed to the left and right target protrusions 45X, and the distributed external force is concentrated in the connection portion (i.e., corner of L-shaped first upper bracket 45X1) of the vertical wall 45X1a and the horizontal wall 45X1b, so that deformation of the first upper bracket 45X1 can be promoted.

In the present embodiment, the side reinforcement portion 30S has the upper wall 33 which is fixed to the first cross member 43 (cross member 43) and faces upward, the inclined wall 34 which extends to the outside of the vehicle in the longitudinal direction of the vehicle and downward in the vertical direction of the vehicle from the upper wall 33, and the panel fixing wall 35 which extends downward from the inclined wall 34 and to which the outer panel 10 is fixed. The first opening 34a extending in the vertical direction is opened in the inclined wall 34, and the second opening 35a adjacent to the first opening 34a is opened in the panel fixing wall 35. As a result, when external force acts on the side reinforcement portion 30S at the time of a frontal collision or the like, deformation of the inclined wall 34 and the panel fixing wall 35 is promoted by the first opening 34a and the second opening 35a. Then, since a column is formed so as to extend continuously between the two first openings 34a and between the two second openings 35a on the inclined wall 34 and the panel fixing wall 35 of the reinforcement member 30, rigidity of the outer panel 10 against elastic deformation is easily maintained.

In the present embodiment, the side reinforcement portion 30S has the bulging portion 36 that bulges toward the inside of the vehicle in the longitudinal direction of the vehicle and has the bottom wall 36a fixed to the lamp device 20 arranged on the outside in the vehicle width direction of the side reinforcement portion 30S, and the coupling wall 37 that couples the fixing part (first vehicle body fixing portion 31a) to the first cross member 43 (cross member 43) and the vehicle widthwise inner wall 36b of the bulging portion 36. As a result, external force input to the reinforcement member 30 at the time of a frontal collision or the like is concentrated on the vehicle widthwise inner wall 36b (i.e., stepped portion in longitudinal direction of vehicle) of the bulging portion 36 and the side reinforcement portion 30S easily deforms at the vehicle widthwise inner wall 36b (stepped portion). Depending on the magnitude of the external force, a large energy-intensive rupture can occur in the vehicle widthwise inner wall 36b of the side reinforcement portion 30S. Accordingly, impact-absorbing performance can be improved significantly.

Moreover, in the illustrated example, as described above, the lower bracket 46 is formed in a tunnel shape protruding upward overall. As a result, at the time of a frontal collision or the like, the left and right side walls 46a of the lower bracket 46 individually deform easily, and impact energy of the external force is easily absorbed as deformation energy of the lower bracket 46.

In the lower bracket 46, the upper flange piece 46a1 and the lower flange piece 46a2 which are joining parts to the second cross member 44 are separated from each other in the longitudinal and vertical directions, and the upper wall 46b which is a locking part (fixing part) to the middle reinforcement portion 30M is located above the upper flange piece 46a1 and the lower flange piece 46a2. As a result, when external force is transmitted from the middle reinforcement portion 30M to the upper wall 46b at the time of a frontal collision or the like, the lower bracket 46 is subjected to a backward rotational moment with the upper flange piece 46a1 as the fulcrum, or a force that causes the side wall 46a to buckle in the longitudinal direction or the like, for example. As a result, the entire side wall 46a deforms easily by the rotational moment, the buckling force, or the like, and deformation of the lower bracket 46 at the time of a frontal collision or the like is promoted.

Moreover, the gap G1 is provided between the connecting edge portion 46a3 of the lower bracket 46 and the lower portion of the flange 44a, and the gap G2 is also provided between the connecting edge portion 46a3 and the upper surface of the protrusion 44b. As a result, the deformation margin of the side wall 46a at the time of a frontal collision or the like becomes large, and deformation can be promoted such that the joint of the lower flange piece 46a2 breaks (peels off). As a result, the impact energy is absorbed more effectively. As in the illustrated example, the upper flange piece 46a1 is preferably joined to the flange 44a of the second cross member 44 at a location higher than the gap.

Furthermore, since the opening 46a4 is opened in the side wall 46a, deformation of the side wall 46a is promoted more effectively at the time of a frontal collision or the like. Then, since the opening 46a4 is provided in a location higher than the gap G2, deformation of the side wall 46a is promoted more effectively.

Then, since the upper rear corner of the side wall 46a is formed as the cutout portion 46a5, when external force is transmitted from the middle reinforcement portion 30M to the upper wall 46b of the lower bracket 46, deformation is promoted such that a part of the lower bracket 46 on the upper wall 46b side is displaced rearward, and this deformation of the lower bracket 46 promotes deformation of the lower portion of the middle reinforcement portion 30M.

Moreover, since the lower bracket 46 is arranged on the front surface side of the second cross member 44, for example, deformation of the lower bracket 46 at the time of a frontal collision or the like is promoted and impact energy is absorbed more effectively than arrangement on the rear surface side. Note that the rigidity difference, which is the difference between the rigidity of the left side wall 46a against loads in the longitudinal direction and the rigidity of the right side wall 46a against loads in the longitudinal direction, is preferably given to the lower bracket 46. For example, by varying the size of the opening 46a4 between the left and right side walls 46a, or by varying the width (thickness) in the longitudinal direction between the left and right side walls 46a, the rigidity difference can be generated. As a result, the lower bracket 46 is twisted at the time of a frontal collision or the like, which in turn promotes torsional deformation of the middle reinforcement portion 30M, resulting in extremely effective absorption of impact energy.

While the embodiment of the present invention has been described above, the present invention is not limited to the above embodiment, and further modifications and changes can be made based on the technical concept of the present invention.

For example, the outer panel 10 is assumed to be a front bumper with the front grille 10d, but the invention is not limited thereto. The outer panel 10 may be, for example, a front bumper without the front grille 10d, a single front grille 10d, or a decorative member (e.g., metallic-looking member).

The sensor device S is not limited to a radar using millimeter waves or microwaves, as long as it is a device that senses the environment outside the vehicle. Examples of other sensors that can be adopted include an ultrasonic sensor that detects the environment outside the vehicle using ultrasonic waves, or an imaging device such as a camera that senses the environment outside the vehicle by imaging.

Each bracket (first upper bracket 45X1, second upper bracket 45X2, and lower bracket 46) is formed separately from the vehicle body structure member 40, but the invention is not limited thereto, and each bracket may be formed integrally with the vehicle body structure member 40 by welding or the like to form a part of the vehicle body structure member 40.

The middle reinforcement portion 30M has an inverted trapezoidal outer shape with the upper bottom generally longer than the lower bottom, but the invention is not limited thereto, and the middle reinforcement portion 30M may have a trapezoidal outer shape with the upper bottom shorter than the lower bottom, or a triangular outer shape protruding upward. In these cases, for example, the upper and lower positions of the first cross member 43 and the second cross member 44 are switched. Alternatively, the middle reinforcement portion 30M may have an inverted triangular outer shape protruding downward.

In the present embodiment, the middle reinforcement portion 30M and the left side reinforcement portion 30S and the right side reinforcement portion 30S are formed of physically separated members with each other and are connected to each other by the connection portion 30C. However, the invention is not limited thereto, and the middle reinforcement portion 30M and each side reinforcement portion 30S may be formed integrally with each other by injection molding or the like and be connected to each other by the connection portion 30C.

In the present embodiment, the vehicle structure 1 is applied as a vehicle front structure, but the invention is not limited thereto, and the vehicle structure 1 may be applied as a vehicle rear structure. In this case, the outer panel 10 is a rear bumper or a rear grille, for example.

### [Reference Signs List]

- 1: Vehicle structure
- 10: Outer panel
- 10e: Back surface
- 20: Lamp device
- 30: Reinforcement member
- 30M: Middle reinforcement portion
- 30Ma: Vehicle widthwise outer edge
- 30S: Side reinforcement portion
- 30Sa: Vehicle widthwise inner edge
- 30C: Connection portion
- 31a: First vehicle body fixing portion (fixing part)
- 33: Upper wall
- 34: Inclined wall
- 34a: First opening
- 35: Panel fixing wall
- 35a: Second opening
- 36: Bulging portion
- 36a: Bottom wall
- 36b: Vehicle widthwise inner wall
- 37: Coupling wall
- 40: Vehicle body structure member
- 43: First cross member (cross member)
- 44: Second cross member
- 45: Plurality of protrusions
- 45X: At least one target protrusion
- 45X1: First upper bracket (at least one target protrusion of middle reinforcement portion)
- 45X1, 45X1: Two target protrusions
- 45X1a: Vertical wall
- 45X1b: Horizontal wall
- 45X2: Second upper bracket
- G: Gap

## Claims

1. A vehicle structure including an outer panel which forms an outer design surface at the front or rear of a vehicle and extends in a vehicle width direction, a cross member which forms a part of a vehicle body structure member of the vehicle and extends in the vehicle width direction, and a reinforcement member which is fixed to the cross member and reinforces the outer panel from a back surface side of the outer panel, the vehicle structure **characterized in that**
the reinforcement member is formed so as to project toward the outside of the vehicle in a longitudinal direction of the vehicle from the cross member,
the reinforcement member includes a middle reinforcement portion which is located at the center in the vehicle width direction, and a side reinforcement portion which is located on the outside in the vehicle width direction of the middle reinforcement portion, and
a gap is provided between a part on the outside of the vehicle in the longitudinal direction of the vehicle of a vehicle widthwise outer edge of the middle reinforcement portion and a part on the outside of the vehicle in the longitudinal direction of the vehicle of a vehicle widthwise inner edge of the side reinforcement portion.

2. The vehicle structure according to claim 1, wherein
the reinforcement member has a connection portion in which a vehicle interior-side end portion in the longitudinal direction of the vehicle of the vehicle widthwise outer edge of the middle reinforcement portion and a vehicle interior-side end portion in the longitudinal direction of the vehicle of the vehicle widthwise inner edge of the side reinforcement portion are connected to each other, and
the gap is extended toward the connection portion in the longitudinal direction of the vehicle.

3. The vehicle structure according to claim 2, wherein
the gap is set so as to narrow in the vehicle width direction from the outside of the vehicle in the longitudinal direction of the vehicle toward the connection portion.

4. The vehicle structure according to claim 1, wherein
each of the middle reinforcement portion and the side reinforcement portion is fixed to the cross member at a location different from that of the connection portion in the vehicle width direction.

5. The vehicle structure according to claim 1, wherein
the cross member is provided with a plurality of protrusions protruding upward from the cross member and separated from each other in the vehicle width direction, and
each of the middle reinforcement portion and the side reinforcement portion is fixed to at least one target protrusion of the plurality of protrusions.

6. The vehicle structure according to claim 5, wherein:
the at least one target protrusion of the middle reinforcement portion includes two target protrusions separated from each other in the vehicle width direction;
both end portions in the vehicle width direction of an upper portion of the middle reinforcement portion are fixed to the two target protrusions; and
each of the two target protrusions has a vertical wall which extends upward and a horizontal wall which extends toward the outside of the vehicle in the longitudinal direction of the vehicle from the upper end of the vertical wall and to which the middle reinforcement portion is fixed.

7. The vehicle structure according to claim 1 or 2, wherein:
the side reinforcement portion has an upper wall which is fixed to the cross member and faces upward, an inclined wall which extends to the outside of the vehicle in the longitudinal direction of the vehicle and downward in a vertical direction of the vehicle from the upper wall, and a panel fixing wall which extends downward from the inclined wall and to which the outer panel is fixed;
a first opening extending in the vertical direction is opened in the inclined wall; and
a second opening adjacent to the first opening is opened in the panel fixing wall.

8. The vehicle structure according to claim 1 or 2, wherein
a lamp device is arranged on the outside in the vehicle width direction of the side reinforcement portion, and
the side reinforcement portion has a bulging portion which bulges toward the inside of the vehicle in the longitudinal direction of the vehicle and has a bottom wall fixed to the lamp device, and a coupling wall which couples a fixing part to the cross member and a vehicle widthwise inner wall of the bulging portion.
